Europäisches Patentamt

European Patent Office

Office européen des brevets

(19)

(11) Publication number: 0 138 519
A2

# EUROPEAN PATENT APPLICATION

(21) Application number: 84306760.4

(22) Date of filing: 04.10.84

(51) Int. Cl.⁴: B 60 D 1/00, A 01 B 59/042

(30) Priority: 07.10.83 GB 8326995

(43) Date of publication of application: 24.04.85
Bulletin 85/17

(84) Designated Contracting States: DE FR GB SE

(71) Applicant: AGRICULTURAL REQUISITES &
MECHANIZATIONS LTD, Colton Road, Rugeley
Staffordshire WS15 3HF (GB)

(72) Inventor: Cooper, David John, Glaemead Colton Road,
Rugeley, Staffs (GB)

(74) Representative: Pearce, Anthony Richmond et al, Marks
& Clerk Alpha Tower Suffolk Street, Queensway
Birmingham B1 1TT (GB)

(54) Towing hitches.

(57) A pick-up towing hitch for a tractor has a fixed part (10, 110) secured to the tractor and a movable part (11, 111) connected to the fixed part by a link arrangement (12, 112). The movable part (11, 111) carries a draw bar (42, 123) for engagement with the tow arm of a trailer in a lowered position of the movable part (11, 111). To provide an improved view of the draw bar (42, 123) in the lowered position, the link arrangement (12, 112) is designed to define with the fixed and movable parts (10, 110 and 11, 111) a parallelogram or trapezoidal linkage such that in moving from its lowered position to a raised, towing position, the movable part (11,111) moves upwardly and forwardly.

TOWING HITCHES

This invention relates to towing hitches for vehicles, e.g. agricultural tractors, and is more particularly concerned with so-called "pick-up hitches" in which the tow arm of a trailer is engaged by a movable draw bar of the hitch and is lifted from an unhitched or rest position on the ground by the vehicle hydraulics into a position for towing.

In a known form of pick-up hitch (see for example FR-A-1229306), a forward end of a movable part of the hitch carrying the draw bar is pivoted about a horizontal axis to the underside of a fixed, tractor-mounted part and the tractor hydraulics are connected via a linkage with the movable part for pivoting the latter through an arc upwardly into a towing position. A mechanical latch arrangement is provided between the fixed and movable parts for retaining the movable part in its pivotally upward position for towing. In another known form of pick-up hitch (see for example WO 81/01391 and DE-AS-1059297), the draw bar of the hitch is mounted so as to be movable vertically from a lower unhitched position to an upper towing position by the tractor hydraulics.

However, recent safety legislation has meant that cab design restricts the driver's view of the hitch to such an extent that it is a skilled operation to manoeuver the tractor into a position where the draw bar can be engaged with the tow arm of a trailer to be towed.

An object of the present invention is to obviate or mitigate the above disadvantage.

0138519

- 2 -

According to the present invention, a towing hitch has a fixed part which is, or is adapted to be, secured to a towing vehicle; a movable part carrying, or adapted to carry, a draw bar which engages a tow arm of a trailer in use, the movable part being movable between a lowered position and a raised or towing position; and a latch for retaining the movable part in its raised position; characterised in that the movable part is connected with the fixed part through the intermediary of a link arrangement such that, in moving from its lowered position to its raised position, the movable part moves upwardly and forwardly.

With this arrangement, it is possible for the driver of a tractor fitted with the towing hitch to have a better view of the draw bar when in its lowered position, thus facilitating the job of manoeuvering the tractor so that the draw bar is correctly presented to the tow arm of the trailer.

The expressions "raised", "lowered", "upwardly", "forwardly", and "rearwardly" as used herein refer to the relative positions when the towing hitch is mounted in use on a vehicle, "forwardly" and "rearwardly" being in respect of the forward direction of travel of the vehicle.

In a particularly preferred embodiment, the link arrangement together with the movable and fixed parts defines a parallelogram or a trapezoidal linkage.

Conveniently, the latch for retaining the movable part in its raised position is provided between the link arrangement and the fixed part or between the movable part and the fixed part.

In a preferred embodiment, the fixed part is adapted to enable at least one draw bar to be detachably connected directly thereto so that the towing hitch can be used as a fixed hitch instead of being used as a pick-up hitch.

An embodiment of the present invention will now be described, by way of example, with reference to the accompanying drawings, in which:-

Fig. 1 is a side elevation of a pick up hitch for mounting on a tractor, shown in a raised or towing position;

Fig. 2 is a front elevation of the pick-up hitch illustrated in Fig. 2;

Fig 3 is a side elevation showing the pick-up hitch of Figs. 1 and 2 in a lowered position, fitted with an alternative draw bar to that illustrated in Figs 1 and 2,

Figs 4 to 6 are views illustrating alternative forms of draw bar,

Fig. 7 is a longitudinal section taken in side elevation of an alternative form of pick-up hitch according to the present invention including a trapezoidal linkage.

Fig. 8 is a part sectional plan view of the pick-up hitch illustrated in Fig. 7, with parts removed for clarity, and

Fig. 9 is a detail view of part of the hitch of Figs 7 and 8 showing a mechanical latch for retaining the hitch in a raised towing position.

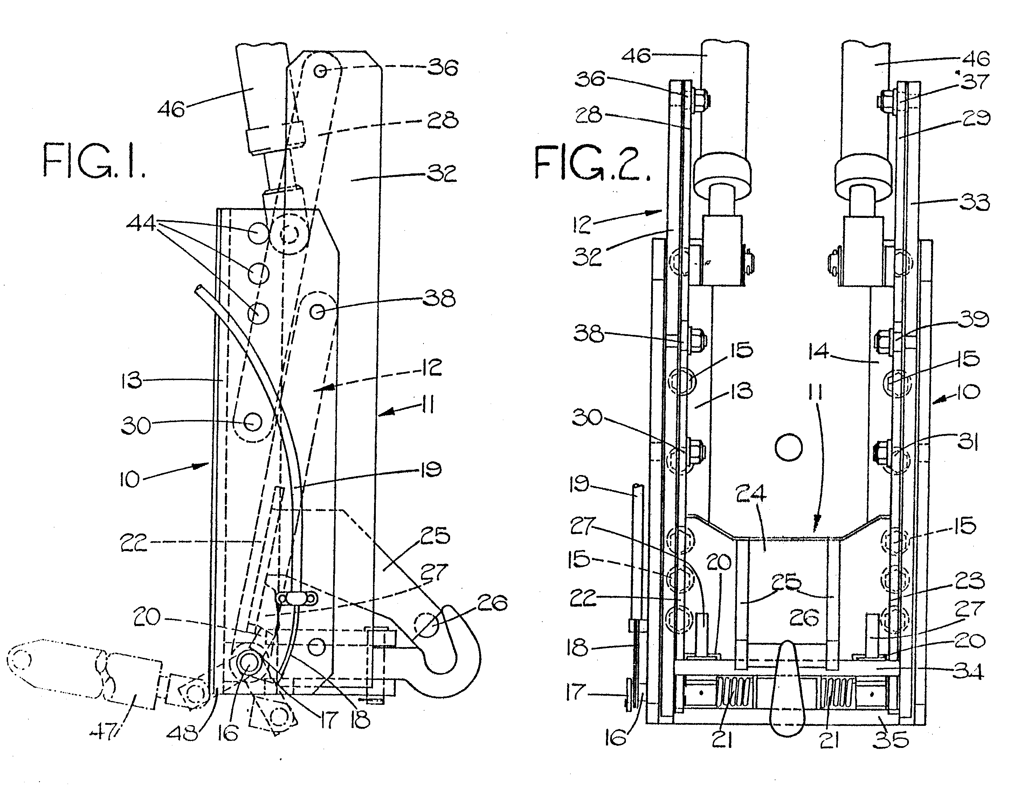

Referring now to Figs. 1 to 3, the towing hitch comprises principally a fixed part 10, a movable part 11, and a link arrangement illustrated by arrow 12 interconnecting the parts 10 and 11.

More particularly, the fixed part 10 comprises a pair of mutually parallel L-section metal members 13 and 14 which are bolted to the rear of a tractor using bolts 15 passing through holes in the base flanges of the L-section metal members 13 and 14. A rotatable shaft 16 is supported by the other flanges of the L-section metal members 13 and 14 adjacent the lower ends thereof. The rotatable shaft 16 extends through the other flange of the metal member 13 and has an arm 17 secured thereto. One end of a cable 18 is secured to the arm 17 and runs through an outer sleeve 19 to a remote location to terminate in a handle (not shown) for operation by a driver of the tractor. Upward movement of the cable 18 causes rotation of the shaft 16 in an anticlockwise direction as viewed in Fig. 1. Mounted on the shaft 16 between and adjacent the said other flanges of the metal members 13 and 14 is a pair of keepers 20 which are locked to the shaft 16 so as to be rotatable therewith.

A pair of helical torsion springs 21 are also mounted on the shaft 16. Each torsion spring 21 is anchored at one of its ends relative to the fixed part 10 and abuts against a respective one of the keepers 20 at its other end. The arrangement is such that the keepers 20 are biassed into the positions illustrated in the drawings, by the torsion springs 21 but can be moved in an anticlockwise direction as viewed in Fig. 1 by upward movement of the cable 18.

The link arrangement 12 includes a pair of lower links 22 and 23 which are mounted at one of their ends on the shaft 16 but which are rotatable relative to the latter. The lower links 22 and 23 are interconnected by a plate 24 whose side edges are welded to the respective links 22 and 23. The plate 24 carries a pair of parallel, cranked arms 25 at whose free ends is carried a horizontal bar 26 spanning the arms 25. Also mounted on the plate 24 is a pair of latch members 27. Each latch member 27 is associated with a respective one of the keepers 20.

The link arrangement 12 also includes a pair of upper links 28 and 29 which are pivotally connected at one of their ends to the respective metal members 13 and 14 via respective pivot pins 30 and 31.

The movable part 11 comprises a pair of mutually parallel, vertical plates 32 and 33 interconnected at their lower ends by a pair of mutually parallel, horizontal plates 34 and 35. The ends of the upper links 28 and 29 remote from the pivot pins 30 and 31 are pivotally connected with the upper ends of the plates 32 and 33, respectively, via respective pivot pins 36 and 37. The ends of the lower links 22 and 23 remote from the shaft 16 are connected with intermediate regions of the plates 32 and 33, respectively, via respective pivot pins 38 and 39. The pivot pins 30 and 31 are coaxial and are horizontally disposed, as are the pivot pins 36 and 37 and the pivot pins 38 and 39. Thus, the fixed part 10, movable part 11, and link arrangement 12 define a parallelogram linkage which is movable in the vertical plane.

0138519

- 6 -

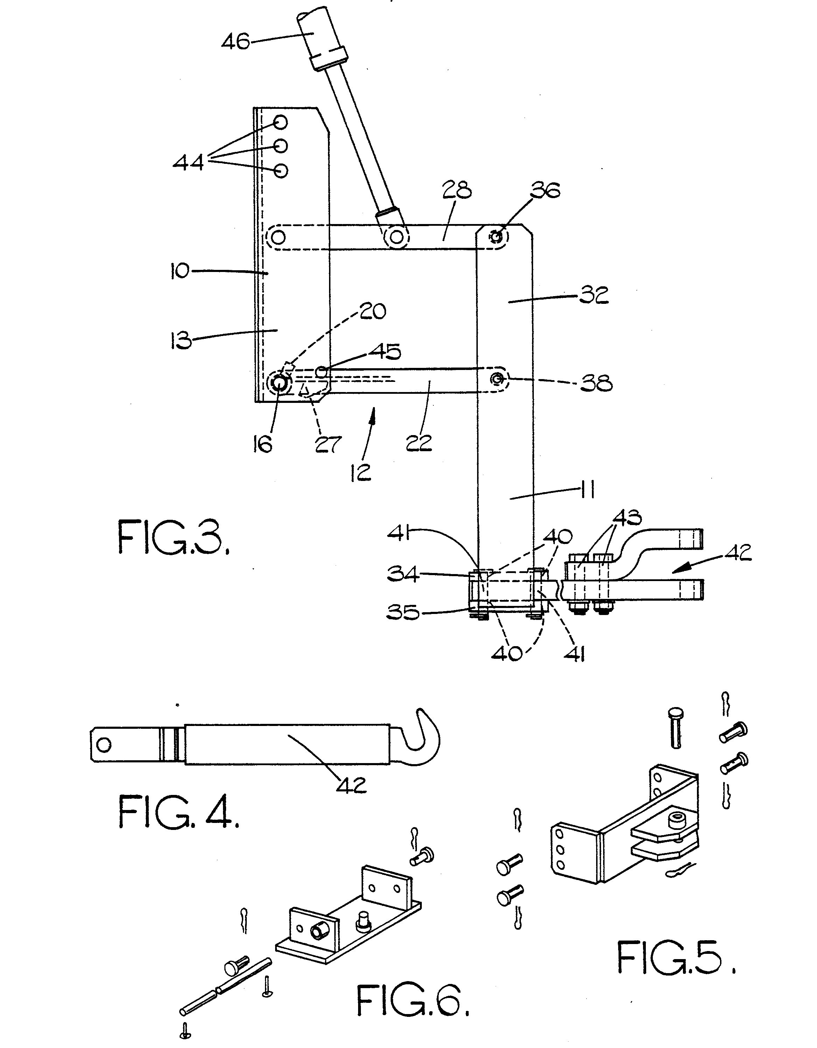

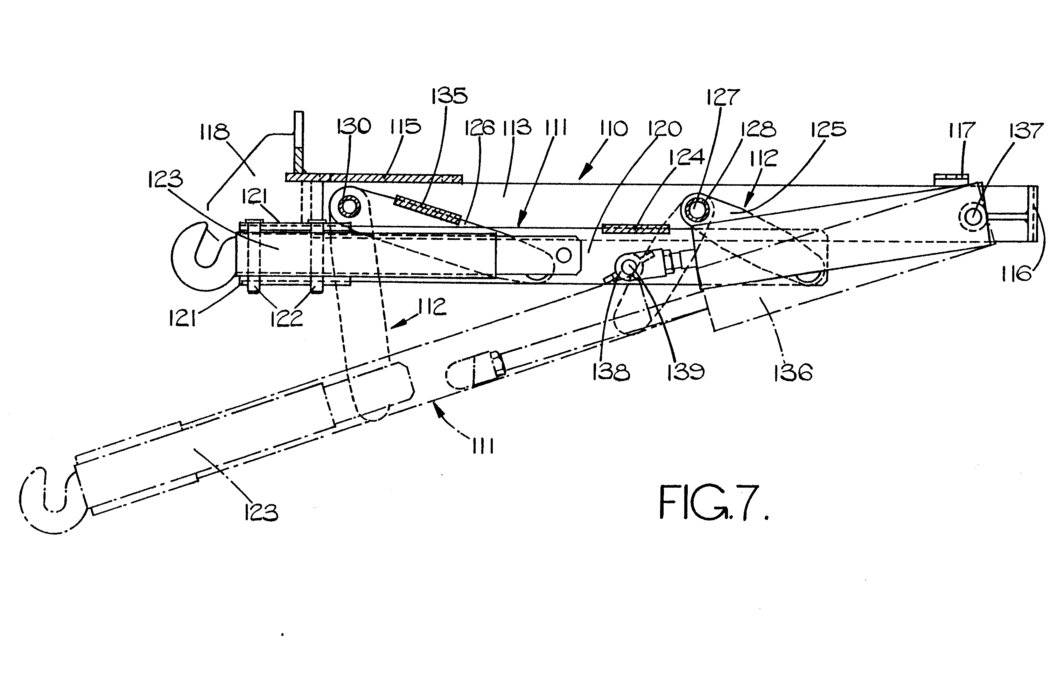

The horizontal plates 34 and 35 are drilled at 40 to receive retaining pins 41 which pass through a draw bar 42 which is to be detachably engaged with the towing arm of a trailer. In Figs. 1 and 2, there is illustrated a draw bar 42 terminating in a hooked end for engaging a towing eye on the tow arm of the trailer. In Fig. 3 there is illustrated a draw bar 42 having a yoked end of which the upper arm of the yoke may be detached by unscrewing and removing fixing bolts 43. In Fig. 4, there is illustrated a reversible draw bar 42 having a hook at one end and a simple connection at the other for engagement with a trailer arm having a yoked termination. It will be appreciated from the above that any one of the above described draw bars 42 may be mounted in the movable part 11 between the horizontal plates 34 and 35 thereof in a removable manner so that the pick up hitch can be easily adapted to tow trailers having a variety of towing terminations. In order to increase further the variety of trailers which can be towed, the said other flanges of the L-section metal members 13 and 14 are drilled at upper locations 44 and lower locations 45 to enable the towing hitch to be used with a standard high level draw bar and a standard low level draw bar as illustrated in Figs. 5 and 6 respectively, where the required retaining pins and security clips are also illustrated. Such high and low level draw bars are fitted after detachment of the links 22, 23, 28 and 29 from the fixed part 10.

The above described pick-up hitch can be operated by a pair of rams whose piston rods are pivotally connected with the respective upper links 28 and 29 intermediate the ends of the latter. As an alternative, an independent auxiliary hydraulic ram 47 may be provided
which is connected with the lower links 22 and 23 via
an operating link 48. The precise choice of means for
moving the pick-up hitch is dependent upon the
particular vehicle to which the pick up hitch is to be
attached. For example, in some designs of vehicle, it
is necessary to connect the existing hydraulic rams of
the vehicle via a linkage arrangement with the links 28
and 29, such linkage arrangement including telescoping
arms which permit the hydraulics to be used
independently of the pick up hitch when the latter is
in use. In Fig. 3, the rams are shown in an extended
position in which the draw bar 42 is in a lowered,
rearward position relative to the forward direction of
travel of the vehicle fitted with the hitch. When the
rams are retracted, the links 22, 23, 28 and 29 are
pivoted upwardly until the movable part is disposed
adjacent to the fixed part 10. In this position, the
draw bar 42 is in a raised position which is disposed
forwardly (relative to the direction of forward travel
of the vehicle) of the lowered position. In the raised
position, the latch members 27 rest against the
respective keepers 20 so retaining the pick up hitch in
its raised position. It will be seen from Figs. 1 and
2, that in the raised position, the bar 26 extends
across the opening of the tow hook thus preventing the
towing eye of the trailer from becoming inadvertently
detached from the hook. When it is desired to lower
the pick-up hitch, the tractor hydraulics are operated
to lift the movable part 11 slightly so as to take the
weight of the assembly off the keepers 20. Retraction
of the cable 18 can then be effected to pivot the
keepers 20 in an anticlockwise direction as illustrated
in Fig. 1 so that the movable part 11 is free to drop
when permitted to do so by the rams.

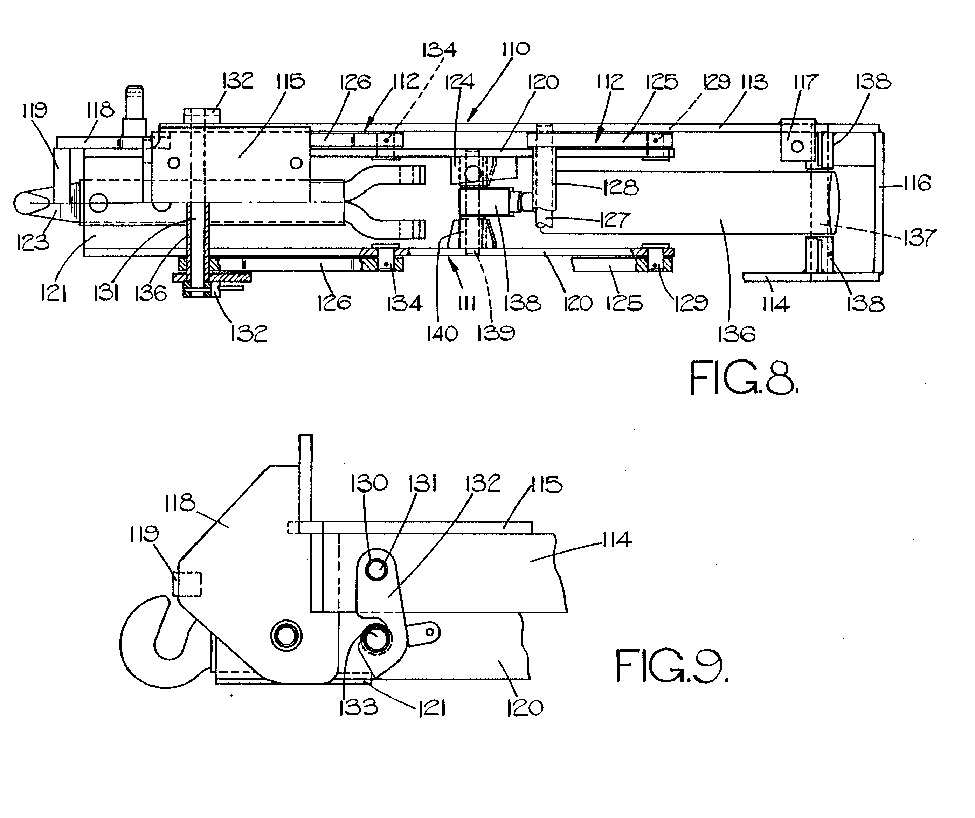

Referring now to Figs 7 to 9, the pick-up hitch illustrated therein is considered to be more suitable than the pick-up hitch of Fig. 1 in cases where operation of the hitch is required to be effected with a hydraulic ram which is in a similar location to ram 47 (see Fig. 1). The pick-up hitch of Figs. 7 to 9 has a fixed part 110, a movable part 111 and a trapezoidal link arrangement illustrated by arrows 112 interconnecting the parts 110 and 111. The fixed part 112 comprises a pair of mutually parallel metal side plates 113 and 114 which are interconnected by a cross plate 115 and a forward end plate 116. The cross plate 115 and a pair of further plates 117 (only one shown) are drilled to enable the fixed part 110 to be bolted to the underside of the tractor. At its rearward end, the fixed part 110 is fitted with a pair of plates 118 and a horizontal bar 119 whose purpose is the same as that described above for bar 26.

The movable part 111 comprises a pair of mutually parallel plates 120 interconnected at their rear end portions by upper and lower transverse plates 121 each provided with a pair of holes therein to receive pins 122 which pass through a reversible draw bar 123 which is the same as draw bar 42 (Fig. 4). The plates 121 are also interconnected intermediate their ends by an upper transverse plate 124.

The link arrangement 112 comprises a pair of mutually parallel forward links 125 and a pair of mutually parallel rearward links 126. The links 125 are shorter than the links 126. The upper end of the forward links are pivotally connected with the fixed part 110 through the intermediary of a common shaft 127. The shaft 127 is fixed to the side plates 113 and 114 and passes through the links 125 and through a bearing sleeve 128 which is secured to and interconnects the upper ends of the links 125. The assembly of links 125 and sleeve 128 are free to pivot about the shaft 127. The lower ends of the links 125 are pivotally attached to the respective plates 120 through respective stub axles 129.

The rearward links 126 are pivotally mounted at their upper ends on a bearing sleeve 130 which is secured at its ends in the respective side plates 113 and 114. A rotary shaft 131 extends through the sleeve 130 and has a hooked latch element 132 secured to each end thereof externally of the side plates 113 and 114. The latch elements 132 are each arranged to engage with a respective boss 133 (only one shown) projecting laterally from the respective side plate 120. A spring loaded cable (not shown) is connected to one of the latch elements 132 for resiliently urging the latch elements 132 into the path of movement of the respective bosses 133. Remote operation of the cable by the driver is effected against the action of the spring to release the bosses 133.

The lower ends of the rearward links 126 are pivotally attached to the respective plates 120 via stub axles 134. Intermediate their ends, the links 126 are interconnected by an upper transverse reinforcing plate 135.

A hydraulic ram 136 is pivotally mounted at its forward end between the side plates 113 and 114 on a shaft 137. which is engaged in opposed short sleeves 138 secured to the inner faces of side plates 113 and 114 and to the end plate 116 by reinforcing flanges. The piston rod of the ram 137 terminates in a head 138 which is bored and sleeved to receive a shaft 139 engaging in short sleeves 140 secured to the plates 120 by reinforcing flanges.

It will be appreciated from the above that the fixed part 110, the movable part 111 and the links 125 define a trapezoidal linkage which enables the movable part 111 to be moved between a lowered position in which the part 111 and a raised position by operation of the ram 136. In its lowered position (as shown in dotted line in Fig 7), the movable part 111 is inclined at an acute angle relative to the fixed part 110 with its rearward end (i.e the end carrying the draw bar lower than its forward end because of the difference in lengths of the levers 125 and 126. In attaining this position, it will be appreciated that the movable part 111 moves downwardly and rearwardly. In its raised or towing position, the movable part 111 lies parallel to and partly inside the fixed part 110 (as shown in full line in Fig, 7). When being moved by the ram 136 into its raised position, the movable part 111 moves upwardly and forwardly. During this movement, the bosses 133 engage the lower ends of the latch elements 132 which are inclined so as to permit the latter to be pivoted against the action of the spring in the spring loaded cable so as to permit engagement of the bosses in the hooked portions of the elements 132.

When the movable part 111 is to be lowered, the ram 136 is retracted slightly so as to take the weight of the movable part 111 and lift it slightly so that the latch elements 132 can be disengaged from their respective bosses 132 by pulling on the cable. Thereafter, the supply pressure to the ram is cut off leaving the movable part 111 to move under its own weight and under the weight of the trailer into its lowered position.

CLAIMS:

1. A towing hitch has a fixed part (10,110) which is, or is adapted to be, secured to a towing vehicle; a movable part (11, 111) carrying, or adapted to carry, a draw bar (42, 123) which engages a tow arm of a trailer in use, the movable part (11, 111) being movable between a lowered position and a raised or towing position; and a latch (27, 132) for retaining the movable part in its raised position; characterised in that the movable part (11, 111) is connected with the fixed part (10, 110) through the intermediary of a link arrangement (12, 112) such that, in moving from its lowered position to its raised position, the movable part (11, 111) moves upwardly and forwardly.

2. A towing hitch as claimed in claim 1, wherein the link arrangement (12) together with the movable and fixed parts (11 and 10) defines a parallelogram linkage.

3. A towing hitch as claimed in claim 1 or 2, wherein the latch (27) for retaining the movable part (11) in its raised position is provided between the link arrangement (12) and the fixed part (10).

4. A towing hitch as claimed in any preceding claim, wherein the fixed part (11) is adapted to enable at least one draw bar to be detachably connected directly thereto so that the towing hitch can also be used as a fixed hitch.

5.  A towing hitch as claimed in claim 1, wherein the link arrangement (112) together with the movable and fixed parts (111 and 110) defines a trapezoidal linkage movable in substantiallly vertical plane in use.

6.  A towing hitch as claimed in claim 5, wherein the link arrangement (112) comprises two sets of links (125 and 126), the links (126) of one set being disposed rearwardly of and being longer than the links (125) of the other set.

7.  A towing hitch as claimed in claim 5 or 6, wherein the fixed part (110) is arranged to receive an upper portion of the movable part (111) therein when the latter is in its raised position.

8.  A towing hitch as a claimed in claim 5, 6 or 7 wherein a ram (136) is provided for moving the movable part (111) from its lowered position to its raised position, said ram (136) being pivotally mounted at one end on the fixed part (110) and being pivotally attached at its other end to the movable part (111).

FIG.2.

FIG.1.

0138519

2/4

FIG.3.

FIG. 4.

FIG.6.

FIG.5.

FIG.7.

FIG.8.

FIG.9.